# EUROPEAN PATENT SPECIFICATION

(11) **EP 3 348 703 B1**
(45) Date of publication and mention of the grant of the patent: **28.08.2019**
(21) Application number: 18150370.7
(22) Date of filing: 04.01.2018
(51) Int. Cl.: D06F 39/08

(54) **WATER DRAINAGE PIPE OF THE TYPE WITH TWO VALVES FOR WASHING MACHINES SUCH AS DISHWASHERS AND LAUNDRY MACHINES**
WASSERABLAUFSCHLAUCH DES TYPS MIT ZWEI VENTILEN FÜR WASCHMASCHINEN WIE ZUM BEISPIEL GESCHIRRSPÜLMASCHINEN UND WASCHMASCHINEN
TUYAU DE DRAINAGE DE L'EAU DU TYPE A DEUX SOUPAPES POUR MACHINES A LAVER TELLES QUE DES LAVE-VAISSELLE ET DES LAVE-LINGE

(30) Priority: 17.01.2017 IT 201700004571
(43) Date of publication of application: 18.07.2018
(73) Proprietor: TP Reflex Group S.p.A., 21040 Venegono Superiore (VA) (IT)
(72) Inventor: BRUSA, Alberto, 21040 Venegono Superiore (VA) (IT); MACCHI, Claudio, 21040 Venegono Superiore (VA) (IT); ROTTA, Andrea, 21040 Venegono Superiore (VA) (IT); REVELLO, Ivo, 21040 Venegono Superiore (VA) (IT)
(74) Representative: Rastelli, Franco

(56) References cited:
- EP-A1- 2 886 035
- GB-A- 2 090 382
- JP-U- S5 990 757
- US-A1- 2013 025 637

## Description

### BACKGROUND OF THE INVENTION

The present invention concerns a water drainage pipe with two valves for washing machines such as dishwashers and laundry machines.

The field of the invention is that of pipes for water drainage from washing machines, in which water is drained by means of a pump.

In these applications there is the need to prevent the pump from being damaged due to phenomena of cavitation, caused by the water column that accumulates in the low pressure drainage length of the pipe.

To overcome this problem, it is known to create, in the low pressure length of the water drainage pipe, a side opening that temporarily places the pipe in communication with the outside, so as to take the inside of the pipe to atmospheric pressure and thereby avoid the occurrence of undesirable low pressures, capable of causing cavitation in the pump of the washing machine and consequently of damaging it.

For this purpose valves are used, fitted directly on a length of the wall of the drainage pipe and at its opening towards the outside.

In this way water is prevented from flowing through the same opening in normal conditions or conditions of compression of the pipe, while allowing the air to access the inside of the same pipe if low pressure lengths are formed.

In the known solutions described above, it is desirable to prevent operation of the valve from being compromised by the introduction of debris that can be found outside or inside the pipe.

EP 2 886 035 A1 discloses a water drainage pipe with the features of the preamble of claim 1.

It is also desirable to be able to ensure the necessary control of the described opening, also in the event of general malfunction of the valve.

### SUMMARY OF THE INVENTION

The main aim of the present invention is to provide a drainage pipe for washing machines which, unlike known pipes of the same type, is able to protect the valve from impurities, while ensuring hermetic seal of the drainage pipe on the aforesaid side opening, in the event of general malfunction of the valve used.

These and other objects are achieved with the drainage pipe of claim 1.

Preferred embodiments of the invention are disclosed in the remaining claims.

In comparison with known water drainage pipes for washing machines, the pipe of the present invention offers the advantage of protecting the valve from impurities.

The drainage pipe of the invention also offers the advantage of ensuring the necessary hermetic seal on the side opening thereof, also in the event of failure or general malfunction of the valve.

### BRIEF DESCRIPTION OF THE DRAWINGS

These and other objects, advantages and characteristics are disclosed in the description below of some preferred embodiments of the pipe of the invention illustrated, by way of non-limiting examples, in the figures of the accompanying drawings, wherein:
Figs. 1, 2, 1A, 2A, 1B and 2B show perspective views of three different embodiments of the drainage pipe of the invention;
Figs. 3, 3A and 3B show exploded views of the drainage pipe of the preceding Figs. 1, 1A and 1B;
Figs. 4, 4A and 4B show the drainage pipe of Figs. 1, 1A, 1B along section A-A;
Figs. 5, 5A and 5B show the drainage pipe of Figs. 2, 2A and 2B along section B-B; and
Fig. 6 shows an example of the method of application of the pipe of the preceding figures.

### DESCRIPTION OF PREFERRED EMBODIMENTS

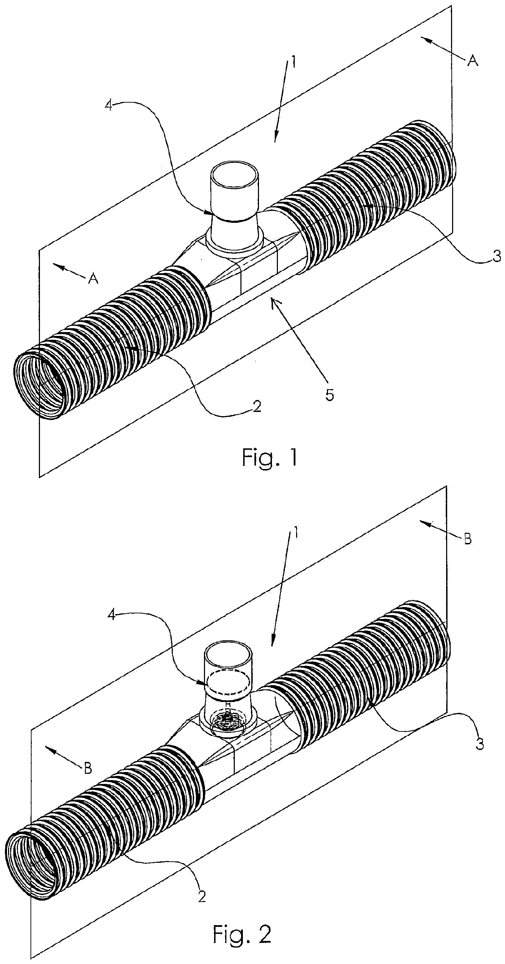

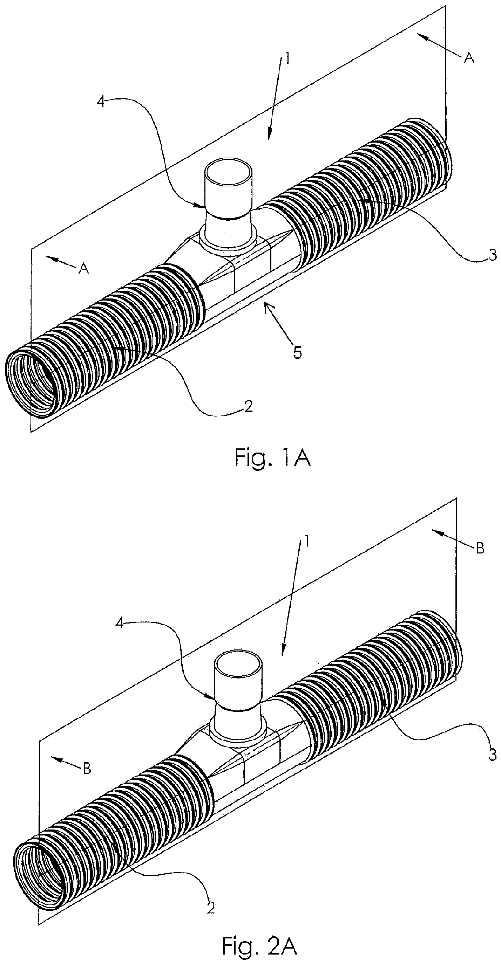

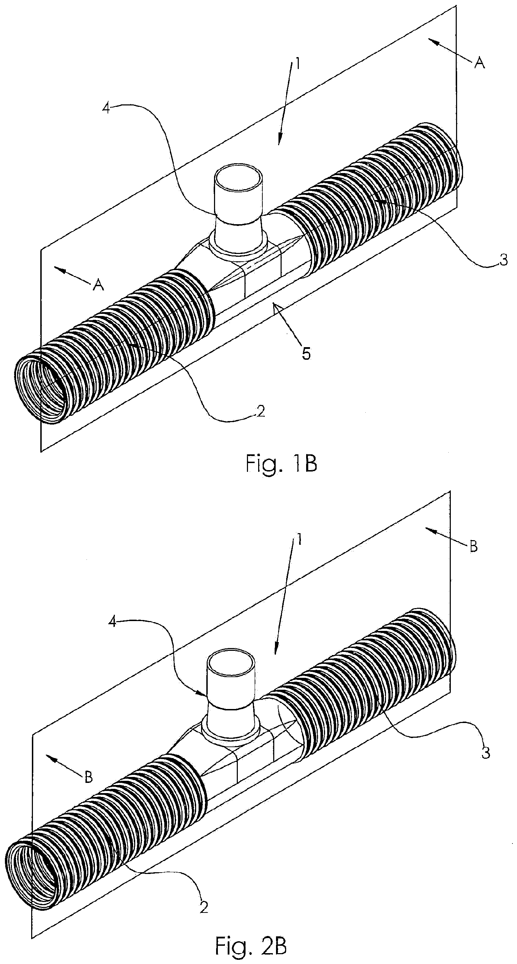

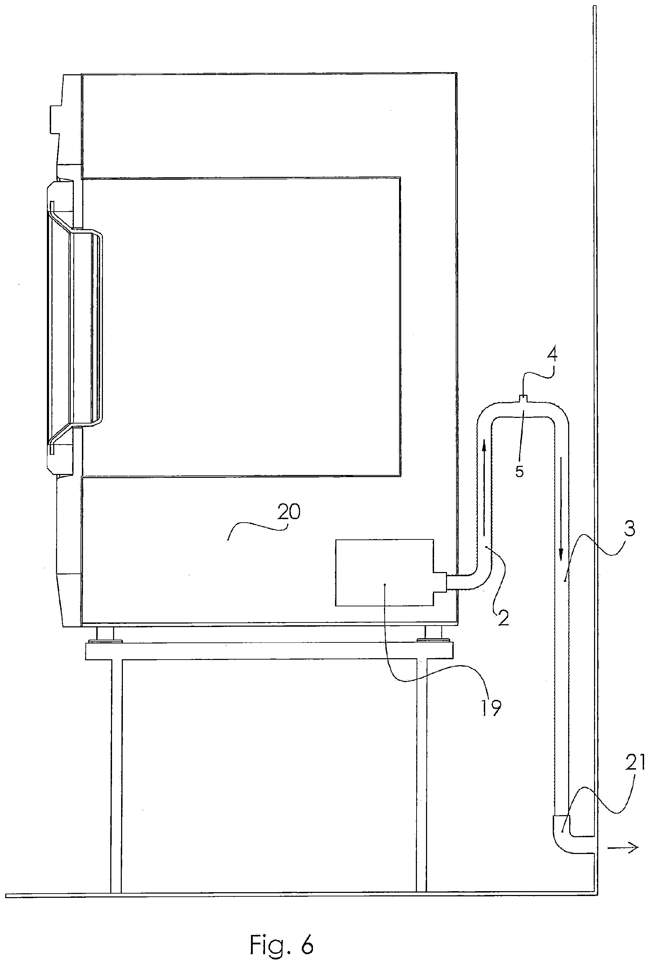

The pipe of the invention is indicated as a whole with the numeral 1 in Figs. 1 and 2. The pipe 1 is composed of a length 2 for the connection to the pump 19 of the washing machine 20 of Fig. 6, of a length 3 for conveying the water towards the outside drain 21 and of an intermediate length 5 bearing a valve body 4.

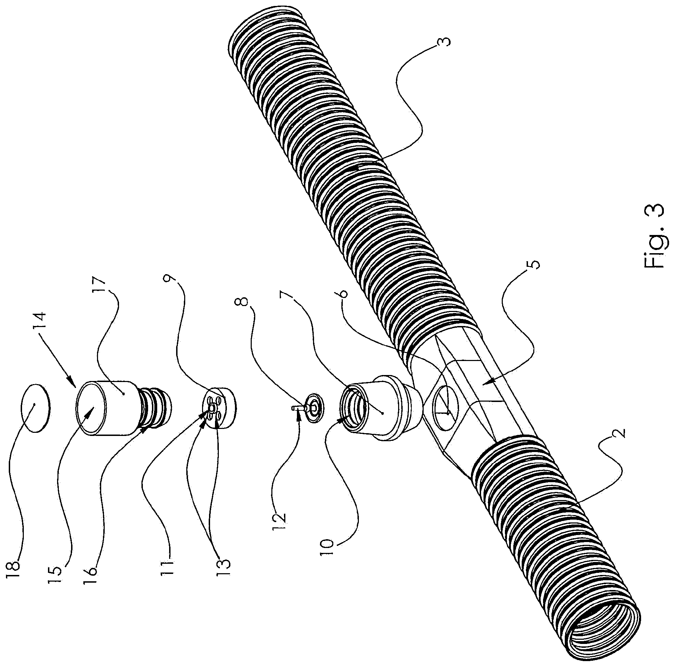

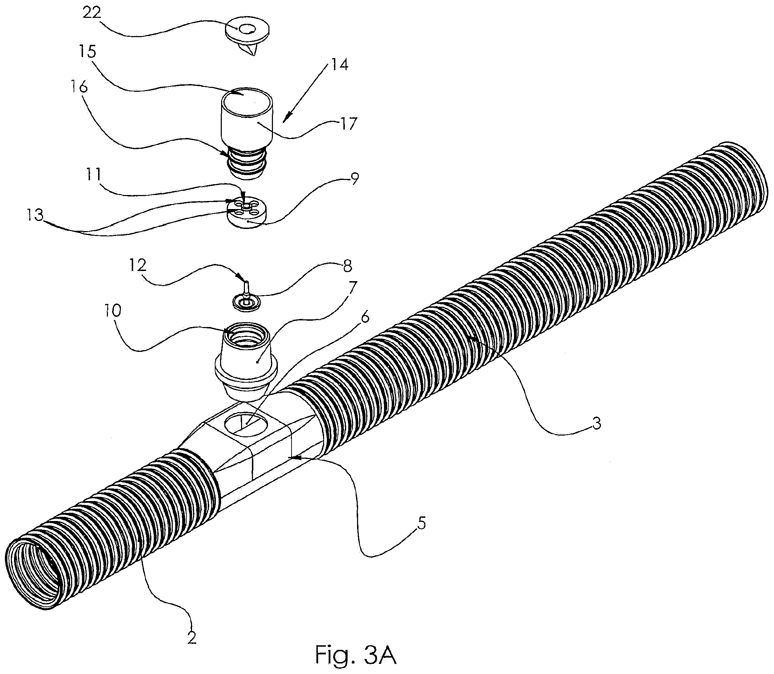

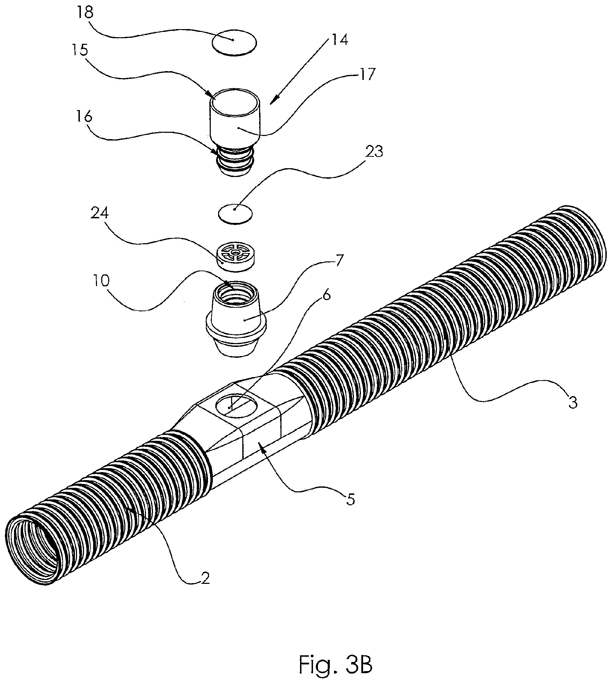

As better shown in Fig. 3, the aforesaid valve body 4 bears a side opening 6 on which there is coupled with pressure a connection element 7, preferably made of rubber and provided with an axial hole 10.

Inside the aforesaid connection element 7 there is also accommodated an umbrella valve 8, in turn housed in a corresponding support 9, fastened, preferably snap fastened in a removable manner, to the inside of said hole 10.

In particular, the aforesaid support 9 consists of a rigid ring-shaped body, provided both with a central axial hole 11 for retaining the stem 12 of the valve 8, and with a plurality of axial peripheral holes 13 that allow air to pass inside the pipe 1, passing through the hole 10 of the element 7 and the opening 6 of the valve body 4.

On the connection element 7 of the pipe 1 there is fastened a bypass element 14, which has an axial hole 15 that passes through both a coupling portion 16 of said element 14 to the element 7, and a portion 17 that bears, on the mouth of the hole 15 opposite the aforesaid portion 16, a breathable membrane 18, for example fastened by gluing and the like.

Preferred for the invention are semi-permeable membranes (i.e. permeable to gases and impermeable to liquids). By way of non-limiting example, membranes suitable for the invention are membranes better known on the market as "protective vents" or "adhesive vents".

These membranes in particular perform the function of allowing the air to flow in both directions through the aforesaid hole 15 and therefore also through the opening 6, while preventing the water from passing from the inside towards the outside of the pipe 1.

In use, the length 2 of the pipe of the invention is connected to the water drainage pump 19 of the washing machine 20, in the example illustrated in Fig. 6 a laundry machine. The length 3 of the pipe of the invention is instead connected to the outside water drain 21.

In the event of the presence of low pressure in the aforesaid length 3 of the pipe 1, the air coming from the outside of this latter is drawn through the breathable membrane 18.

From here the air passes first through the bypass element 14, then through the peripheral holes 13 of the support 9, thereby causing the umbrella valve 8 to open.

The air drawn from the outside of the pipe 1 thus has access to the inside of the hole 10 of the connection element 7 and from here to the inside of the pipe 1, passing through the opening 6 and rebalancing its internal pressure with the external atmospheric pressure.

The function of the aforesaid membrane 18 is in particular that of preventing, while maintaining the functionalities described above, the impurities and debris coming from outside the valve body 4 from accessing the inside thereof, until reaching the umbrella valve 8 and thus compromising the regular operation thereof.

Moreover, in the event of general malfunctioning of the umbrella valve 8, the membrane 18 ensures the hermetic seal of the pipe 1 at the level of the valve body 4, preventing drainage water from leaking outside of the pipe in normal using conditions thereof under compression.

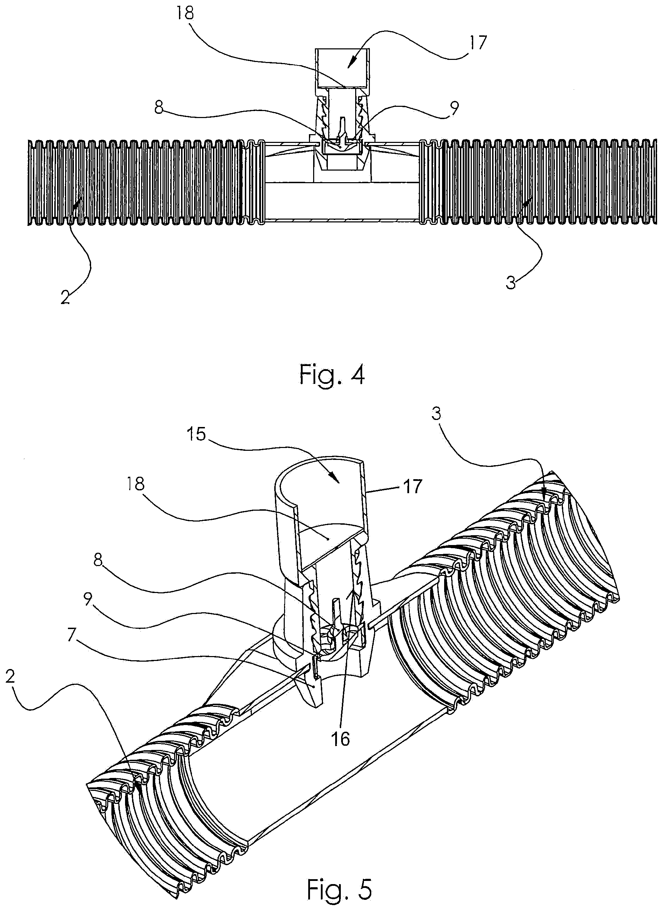

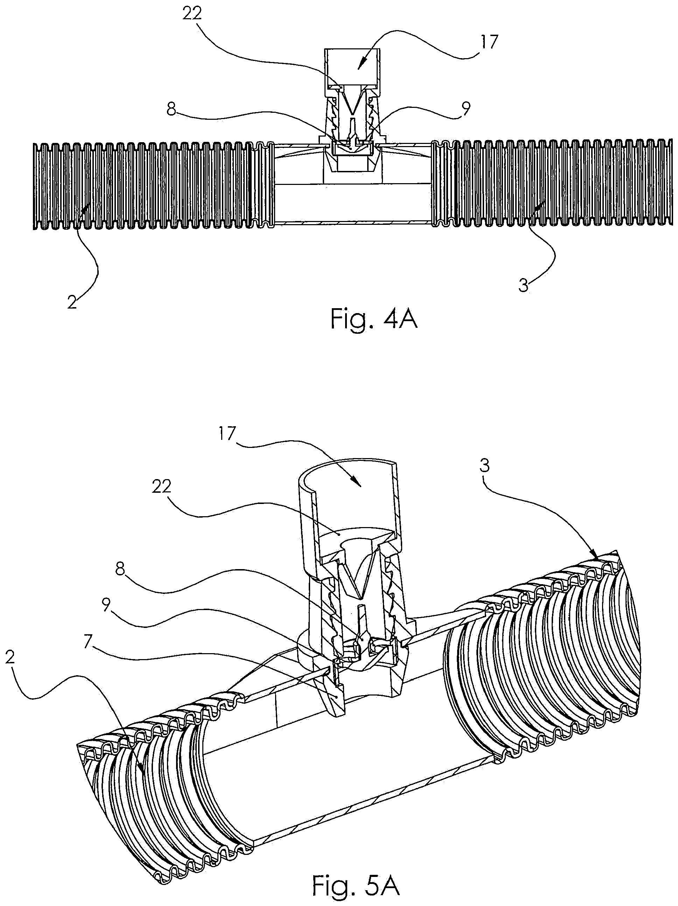

In the variant shown in Figs. 1A, 2A, 3A, 4A and 5A, the numbering of the elements in common with the embodiment described above remains unchanged.

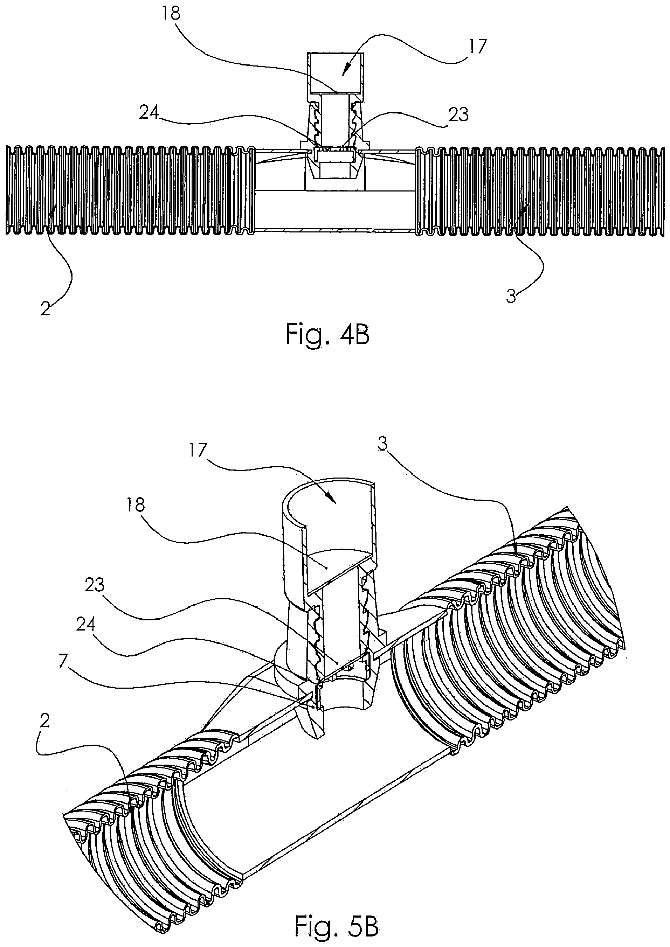

The aforesaid variant differs from that of the preceding Figs. 1 to 5, in particular for the fact that a duck beak valve 22 is used in place of the membrane 18, also housed inside the hole 15 of the portion 17 of the bypass element 14.

In the variant shown in Figs. 1B, 2B, 3B, 4B and 5B, the pipe of Figs. 1 to 5 has been modified to house, in the hole 10 of the connection element 7, a second breathable membrane 23, of the same type as the membrane 18 of Fig. 3 and supported by a corresponding perforated support 24, also housed inside the hole 10 of the same element 7.

Modifications can be made to the invention, as described above and illustrated in the figures of the accompanying drawings, in order to produce variants that nonetheless fall within the scope of the appended claims.

Therefore, for example, it is possible to combine the duck beak valve 22 with the membrane valve 23, in any case arranged in the hole 10 of the element 7 and in the hole 15 of the element 14.

Also included are the combinations of two duck beak valves 22 or of two umbrella valves 8, respectively in the element 7 and in the element 14.

## Claims

1. A water drainage pipe (1) for washing machines, in particular dishwashers and laundry machines, comprising a length (2) for the connection of said pipe (1) to a pump (19) of a washing machine (20), a length (3) for water drainage towards the outside of the pipe and an intermediate pipe length (5) bearing a side opening (6) provided with a valve body (4), said valve body (4) being provided with a connection element (7) fitted with an axial hole (10) and first valve means for controlling said opening (6), ensuring a tight seal of the pipe (1), **characterised in that** said valve body (4) further comprises second valve means (14; 8,18,22) for controlling said opening (6) so that the impurities and the cuttings coming from the outside of the valve body do not access to the inside of the valve body.

2. A pipe according to claim 1, **characterised in that** said second valve means (14; 8,18,22) comprise a bypass element (14) fitted with an axial hole (15), which deploys inside a portion (17) coupling said element (14) to said second means (8,18,22) and a portion (16) coupling the same element (14) to said connection element (7).

3. A pipe according to claim 2, **characterised in that** said first and second valve means consist of an umbrella valve (8).

4. A pipe according to claim 2, **characterised in that** said first and second valve means consist of a breathable membrane (18).

5. A pipe according to claim 2, **characterised in that** said first and second valve means consist of a duck beak valve (22).

6. A pipe according to claim 2, **characterised in that** said first valve means consist of a breathable membrane (23) and a corresponding support (24) of the same membrane (23) inside said hole (10) of the connection element (7).

7. A pipe according to claim 6, **characterised in that** said first valve means consist of a breathable membrane (23) and that said second valve means consist of a duck beak valve (22) or the mentioned umbrella valve (8).

8. A pipe according to claim 3, **characterised in that** said first valve means consist of an umbrella valve (8) and that said second valve means consist of a breathable membrane (18) or a duck beak valve (22).

9. A pipe according to claim 3, **characterised in that** said umbrella valve (8) comprises a stem (12) and a support (9) provided with a central axial hole (11) and axial peripheral holes (13).

## Patentansprüche

1. Wasserablaufschlauch (1) für Waschmaschinen, insbesondere Geschirrspülmaschinen und Waschmaschinen, umfassend einen Abschnitt (2) für die Verbindung des Schlauchs (1) mit einer Pumpe (19) einer Waschmaschine (20), einen Abschnitt (3) für Wasserablauf zur Außenseite des Schlauchs hin und einen zwischenliegenden Schlauchabschnitt (5), der eine Seitenöffnung (6) aufweist, die mit einem Ventilkörper (4) versehen ist, wobei der Ventilkörper (4) mit einem Verbindungselement (7), das mit einem axialen Loch (10) ausgestattet ist, und ersten Ventilmitteln zum Regeln der Öffnung (6) versehen ist, wodurch eine dichte Abdichtung des Schlauchs (1) gewährleistet ist, **dadurch gekennzeichnet, dass** der Ventilkörper (4) ferner zweite Ventilmittel (14; 8, 18, 22) zum Regeln der Öffnung (6) umfasst, sodass die Verunreinigungen und die Schnitte, die von der Außenseite des Ventilkörpers kommen, keinen Zugang zur Innenseite des Ventilkörpers finden.

2. Schlauch nach Anspruch 1, **dadurch gekennzeichnet, dass** die zweiten Ventilmittel (14; 8, 18, 22) ein Umleitungselement (14) umfassen, das mit einem axialen Loch (15) ausgestattet ist, welches sich innerhalb eines Abschnitts (17), der das Element (14) an die zweiten Mittel (8, 18, 22) kuppelt, und eines Abschnitts (16), der dasselbe Element (14) an das Verbindungselement (7) kuppelt, erstreckt.

3. Schlauch nach Anspruch 2, **dadurch gekennzeichnet, dass** die ersten und zweiten Ventilmittel aus einem Schirmventil (8) bestehen.

4. Schlauch nach Anspruch 2, **dadurch gekennzeichnet, dass** die ersten und zweiten Ventilmittel aus einer atmungsaktiven Membran (18) bestehen.

5. Schlauch nach Anspruch 2, **dadurch gekennzeichnet, dass** die ersten und zweiten Ventilmittel aus einem Entenschnabelventil (22) bestehen.

6. Schlauch nach Anspruch 2, **dadurch gekennzeichnet, dass** die ersten Ventilmittel aus einer atmungsaktiven Membran (23) und einer entsprechenden Halterung (24) derselben Membran (23) innerhalb des Lochs (10) des Verbindungselements (7) bestehen.

7. Schlauch nach Anspruch 6, **dadurch gekennzeichnet, dass** die ersten Ventilmittel aus einer atmungsaktiven Membran (23) bestehen, und dass die zweiten Ventilmittel aus einem Entenschnabelventil (22) oder dem genannten Schirmventil (8) bestehen.

8. Schlauch nach Anspruch 3, **dadurch gekennzeichnet, dass** die ersten Ventilmittel aus einem Schirmventil (8) bestehen, und dass die zweiten Ventilmittel aus einer atmungsaktiven Membran (18) oder einem Entenschnabelventil (22) bestehen.

9. Schlauch nach Anspruch 3, **dadurch gekennzeichnet, dass** das Schirmventil (8) einen Schaft (12) und eine Halterung (9) umfasst, die mit einem mittigen axialen Loch (11) und axialen Umfangslöchern (13) versehen ist.

## Revendications

1. Tuyau de drainage de l'eau (1) pour des machines à laver, en particulier des lave-vaisselle et des lave-linge, comprenant une longueur (2) pour le raccordement dudit tuyau (1) à une pompe (19) d'une machine à laver (20), une longueur (3) pour le drainage de l'eau vers l'extérieur du tuyau et une longueur de tuyau intermédiaire (5) présentant une ouverture latérale (6) dotée d'un corps de soupape (4), ledit corps de soupape (4) étant doté d'un élément de raccordement (7) muni d'un trou axial (10) et de premiers moyens de soupape destinés à commander ladite ouverture (6), assurant une étanchéité du tuyau (1),
**caractérisé en ce que** ledit corps de soupape (4) comprend en outre des deuxièmes moyens de soupape (14 ; 8, 18, 22) destinés à commander ladite ouverture (6) de manière à ce que les impuretés et les débris provenant de l'extérieur du corps de soupape ne parviennent pas à l'intérieur du corps de soupape.

2. Tuyau selon la revendication 1, **caractérisé en ce que** lesdits deuxièmes moyens de soupape (14 ; 8, 18, 22) comprennent un élément de dérivation (14) muni d'un trou axial (15), lequel se déploie à l'intérieur d'une partie (17) accouplant ledit élément (14) auxdits deuxièmes moyens de soupape (8, 18, 22) et d'une partie (16) accouplant le même élément (14) audit élément de raccordement (7).

3. Tuyau selon la revendication 2, **caractérisé en ce que** lesdits premiers et deuxièmes moyens de soupape consistent en une soupape parapluie (8).

4. Tuyau selon la revendication 2, **caractérisé en ce que** lesdits premiers et deuxièmes moyens de soupape consistent en une membrane respirante (18).

5. Tuyau selon la revendication 2, **caractérisé en ce que** lesdits premiers et deuxièmes moyens de soupape consistent en un bec de canard (22).

6. Tuyau selon la revendication 2, **caractérisé en ce que** lesdits premiers et deuxièmes moyens de soupape consistent en une membrane respirante (23) et un support (24) correspondant de la même membrane (23) à l'intérieur dudit trou (10) de l'élément de raccordement (7).

7. Tuyau selon la revendication 6, **caractérisé en ce que** lesdits premiers moyens de soupape consistent en une membrane respirante (23) et **en ce que** lesdits deuxièmes moyens de soupape consistent en un bec de canard (22) ou en une soupape parapluie (8) telle que mentionnée.

8. Tuyau selon la revendication 3, **caractérisé en ce que** lesdits premiers moyens de soupape consistent en une soupape parapluie (8) et **en ce que** lesdits deuxièmes moyens de soupape consistent en une membrane respirante (18) ou en un bec de canard (22).

9. Tuyau selon la revendication 3, **caractérisé en ce que** ladite soupape parapluie (8) comprend une tige (12) et un support (9) doté d'un trou axial central (11) et de trous périphériques axiaux (13).
